# EUROPEAN PATENT APPLICATION

(11) **EP 4 753 141 A1**
(43) Date of publication of application: **03.06.2026**
(21) Application number: 24927638.7
(22) Date of filing: 26.08.2024
(51) Int. Cl.: H02P 21/22, H02P 25/03, G05B 21/00, H02P 21/05

(54) **MOTOR CONTROL APPARATUS AND TIMESTAMP COMPENSATION METHOD THEREFOR**

(71) Applicant: DELTA ELECTRONICS, INC., Taoyuan City 320023 (TW)
(72) Inventor: YANG, Zhi-Sheng, Taoyuan City 320023 (TW); HSU, Shao-Yang, Taoyuan City 320023 (TW); SHYU, Yun-Chieh, Taoyuan City 320023 (TW); HSIAO, Chih-Hung, Taoyuan City 320023 (TW)
(74) Representative: 2K Patent Partnerschaft mbB
(86) International application number: PCT/CN2024/114493
(87) International publication number: WO 2026/044449

(57) **Abstract**

a motor control device is used to control a drive circuit to drive a motor to operate, and the motor control device includes a control module, an angle sensing device, and a current sensing device. The control module is use to count a plurality of first specific cycles and a plurality of second specific cycles, and provide a count value that increases with time during each first specific cycle. The angle sensing device is use to sample an angle parameter of the motor at a first time of each first specific cycle according to a resolver ISR, and the current sensing device is use to sample a current parameter provided by the drive circuit at a second time of each second specific cycle according to a current ISR. The control module compensates the angle parameter according to each ISR and the timestamp.

## Description

### Technical Field

The present disclosure relates to a motor control device and a method for operating the same, and more particularly to the motor control device and the method for timestamp compensating the same.

### Description of Related Art

Induction motors are widely used due to their simple structure, easy maintenance and low cost. However, under the same power conditions, PMSMs (permanent magnet synchronous motors) have the advantages of compact size, light weight, and high efficiency. Therefore, most electric vehicles currently use PMSM. However, to achieve more precise control of PMSM, it is generally necessary to continuously sample the angle and current of PMSM to accurately control the PMSM. Therefore, in the entire motor control device structure, the rotor angle position feedback and current sampling play an important role. In order to achieve vector control of the drive circuit in the entire motor control device, the sampling of the motor rotor angle position and the current sampling must be synchronized. Once a state of asynchronism occurs, it is easy for the entire control performance to deteriorate.

Therefore, general motor control devices first need to analyze these feedback signals to obtain the angle. However, due to the hardware characteristics of the internal controller of the motor control device, the operation cycle performed during the angle calculation process is different from the current sampling cycle. The calculation cycle of the angle is different from the current sampling cycle, so the two cannot be obtained synchronously, resulting in a difference between the current angle at the current sampling cycle and the angle obtained at the original angle sampling cycle. This may cause the motor control device to be unable to provide accurate current control.

Therefore, how to design a motor control device and a method for timestamp compensating the same to provide a determination mechanism for identify the electrical angle algorithms corresponding to various scenarios so as to avoid the motor current from being unable to be accurately controlled or unstable has become a critical topic in this field.

### SUMMARY

In order to solve the problems above, the present disclosure provides a motor control device, the motor control device is used to control a drive circuit to drive a motor to operate, and the motor control device includes a control module, an angle sensing device, and a current sensing device. The control module is use to count a plurality of first specific cycles and a plurality of second specific cycles, and provide a count value that increases with time during each first specific cycle, wherein the control module is configured to set a specific flag interval. The angle sensing device is use to sample an angle parameter of a rotor of the motor at a first time of each first specific cycle according to a resolver ISR (interrupt-service-routine). The current sensing device is use to sample a current parameter provided by the drive circuit at a second time of each second specific cycle according to a current ISR, and the control module is use to set a timestamp at a trigger point of each second specific cycle and start the specific flag interval accordingly. wherein the control module is configured to compensate the angle parameter according to the specific flag interval in which the current ISR is located, the timestamp, and a sequence in which the resolver ISR, the current ISR, and a specific ISR occur.

In order to solve the problems above, the present disclosure provides a method for timestamp compensating a motor control device, the motor control device is use to control a drive circuit to drive a motor to operate, and the motor control device comprising an angle sensing device and a current sensing device. The method comprising steps of: Counting a plurality of first specific cycles and a plurality of second specific cycles, and providing a count value that increases with time during each first specific cycle, and setting a specific flag interval. Controlling the angle sensing device to sample an angle parameter of the motor at a first time of each first specific cycle according to a resolver ISR. Controlling the current sensing device to sample a current parameter provided by the drive circuit at a second time of each second specific cycle according to a current ISR, and setting a timestamp at a trigger point of each second specific cycle, and starting the specific flag interval accordingly. Compensating the angle parameter according to the specific flag interval in which the current ISR is located, the timestamp, and a sequence in which the resolver ISR, the current ISR, and a specific ISR occur.

The main purpose and effect of the present disclosure is that the control module of the present disclosure determines whether the count value corresponding to the second time triggered after the timestamp is greater than the count value corresponding to the timestamp, and performs the corresponding control accordingly. Therefore, it is possible to identify the electrical angle algorithm corresponding to various scenarios of the motor system, so as to avoid a condition in which the current parameters obtained by the control module are not accurate enough, resulting the motor current from being unable to be accurately controlled or unstable.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

FIG. 1A is a circuit block diagram of a motor system according to the present disclosure.
FIG. 1B is a schematic diagram of an angle signal conversion method according to the present disclosure.
FIG. 1C is an actual operation sequence diagram of a control module according to the present disclosure.
FIG. 2A is an operation sequence diagram of the motor system under a specific scenario according to the present disclosure.
FIG. 2B is an operation sequence diagram of the motor system under another specific scenario according to the present disclosure.
FIG. 2C is a current waveform schematic diagram of the motor system under another specific scenario according to the present disclosure.
FIG. 3A is an operation sequence diagram of the motor system under a first scenario according to the present disclosure.
FIG. 3B is an operation sequence diagram of the motor system under a second scenario according to the present disclosure.
FIG. 3C is an operation sequence diagram of the motor system under a third scenario according to the present disclosure.
FIG. 3D is an operation sequence diagram of the motor system under a fourth scenario according to the present disclosure.
FIG. 3E is an operation sequence diagram of the motor system under a fifth scenario according to the present disclosure.
FIG. 4A is a schematic diagram of an ISR push situation according to the present disclosure.
FIG. 4B is a flowchart of a timestamp compensation method of the motor control device according to a first embodiment of the present disclosure.
FIG. 4C is a flowchart of the timestamp compensation method of the motor control device according to a second embodiment of the present disclosure.

### Description of Reference Numerals

100: motor system
200: motor
300: drive circuit
400: motor control device
1: control module
ADC1, ADC2: ADC converter
10: control unit
2: angle sensing device
3: current sensing device
Pin: DC input power
Po: AC output power
St: angle signal
PWM: PWM signal
Si: current signal
Pt, Pt1 to Pt3: angle parameter
Pt1', Pt2': current angle parameter
Ia, Ib, Ic, Ia1 to Ia3, Ib1 to Ib3, Ic1 to Ic3: current parameter
R-ISR: resolver ISR
A-ISR, A-ISR': current ISR
ISR: specific ISR
TC1, TC1-1 to TC1-3, TC1_A: first specific cycle
CV: count value
TC1_t: trigger point
TC2, TC2-1 to TC2-3: second specific cycle
T1, T1-1 to T1-3: first time
T2, T2-1 to T2-3: second time
TP: timestamp
Td, Td1 to Td3: time difference
t0 to t1: operation cycle

### DETAILED DESCRIPTION

Reference will now be made to the drawing figures to describe the present disclosure in detail. It will be understood that the drawing figures and exemplified embodiments of present disclosure are not limited to the details thereof.

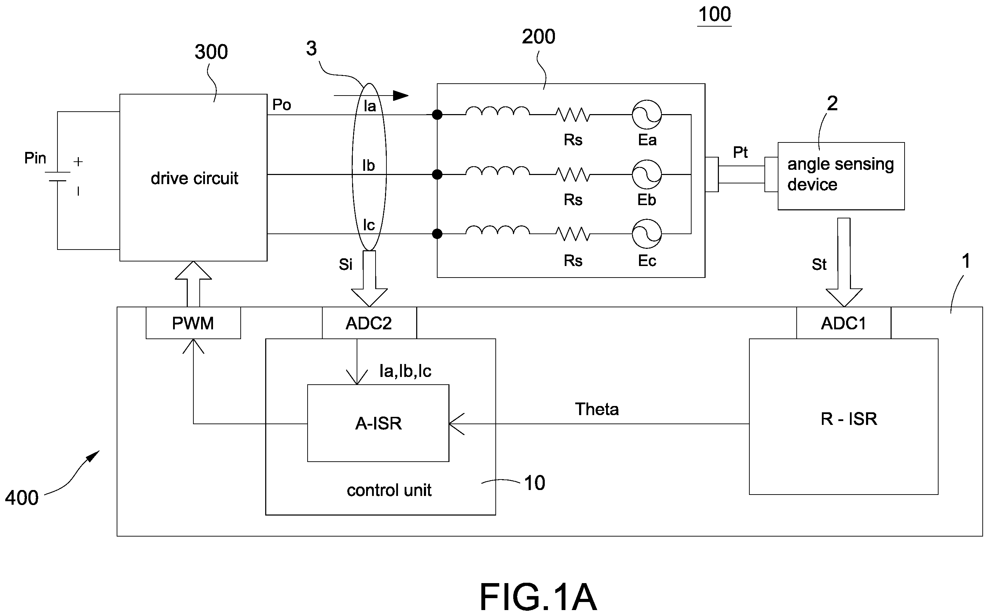

Please refer to FIG. 1A, which shows a circuit block diagram of a motor system according to the present disclosure. The motor system 100 includes a motor 200, a drive circuit 300, and a motor control device 400, and the motor control device 400 is mainly used to control the drive circuit 300 to drive the motor 200 to operate. Specifically, the motor control device 400 includes a control module 1, an angle sensing device 2, and a current sensing device 3. One end of the drive circuit 300 receives an input power Pin, and the other end thereof is coupled to the motor 200. The angle sensing device 2 samples an angle parameter Pt of a rotor of the motor 200 to provide an angle signal St to the control module 1 according to the angle parameter Pt. The current sensing device 3 samples current parameters Ia, Ib, and Ic (i.e., currents of phase A, B, and C) supplied by the drive circuit 300 to the motor 200, and provides a current signal Si to the control module 1 according to the current parameters Ia, Ib, and Ic. The control module 1 receives the angle signal St and the current signal Si, and provides a PWM (pulse width modulation signal) signal PWM to the drive circuit 300 according to the angle signal St and the current signal Si. The drive circuit 300 converts the input power Pin into an output power Po according to the PWM signal PWM to provide output power Po, so as to control the operation of the motor 200.

The drive circuit 300 may preferably be an inverter for converting the DC input power Pin into an AC output power Po. The angle sensing device 2 may preferably be a device such as a resolver for sensing an angle of the motor 200, and the control module 1 may include, for example but not limited to, an ADC (analog-to-digital) converter ADC1 for converting the angle signal St into a suitable format. Therefore, the control module 1 may sample the angle signal St through, for example, but not limited to, the resolver ISR (interrupt-service-routine) R-ISR, and provide it to a control unit 10 inside the control module 1 for interpretation and calculation, so that the control unit 10 may obtain the angle parameter Pt. When the angle sensing device 2 is the resolver, the resolver is coupled to a rotary shaft of the motor 200 to sample the angle parameter Pt through the driving of the rotary shaft of the motor 200. Similarly, the current signal Si provided by the current sensing device 3 may also be converted into the suitable format by, for example, but not limited to, an ADC converter ADC2, and the control module 1 may sample the current signal Si by, for example, but not limited to, a current ISR, and provide it to the control unit 10 inside the control module 1 for interpretation and calculation, so that the control unit 10 may obtain the current parameters Ia, Ib, and Ic. The angle parameter Pt obtained may differ from an actual angle of the motor 200 at that moment, and the present disclosure mainly compensates for this error, so that a result calculated by the control unit 10 is close to the actual value (it will be further described later, and will not be repeated herein).

In particular, ADC1 and ADC2 may preferably use DSADC (Delta-Sigma analog-to-digital converter) for more precise signal conversion, but it is not limited thereto. Therefore, the control unit 10 may generate the PWM signal PWM according to the angle signal St and the current signal Si, and adjust the PWM signal PWM (for example, but not limited to frequency, pulse width, etc.) according to changes in the angle signal St and the current signal Si correspondingly. Therefore, the control module may control the drive circuit 300 by providing the PWM signal PWM to drive the motor 200 through the drive circuit 300 and adjust the speed of the motor 200.

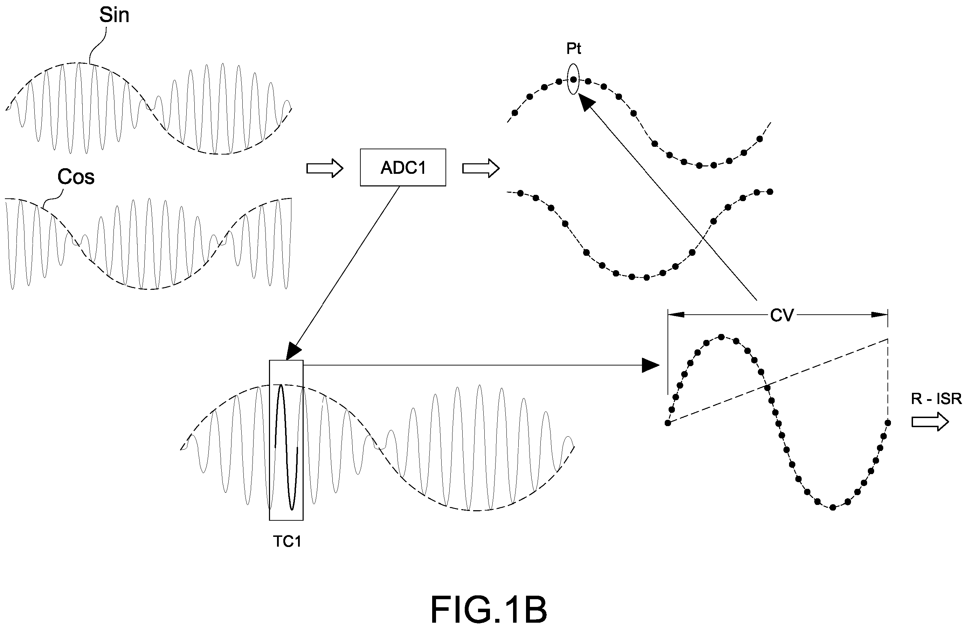

Referring to FIG. 1B, which shows a schematic diagram of an angle signal conversion method according to the present disclosure. When the number of conversions of the ADC converter ADC1 reaches a complete carrier cycle (time count TC1), an interrupt event is generated to trigger the resolver ISR R-ISR to process the Sin and Cos signals of the single complete carrier cycle. The complete carrier cycle of the Sin and Cos signals may be processed to obtain the angle parameter Pt (i.e., a point on the envelope). Due to the limitations of the control module 1, the frequency of the complete carrier cycle cannot be an integer, so the frequency processed by the resolver ISR R-ISR cannot be synchronized with the operating frequency of the control unit 10 or be a multiple thereof (for example, but not limited to, 32*64/20M=102.4us, approximately equal to 9.765kHz).

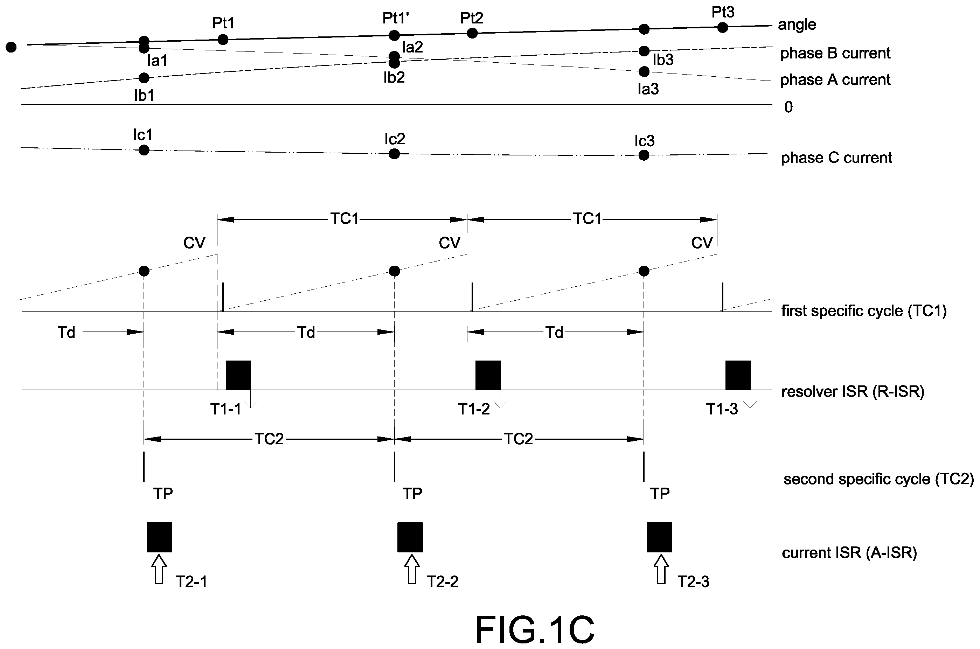

Referring to FIG. 1C, which shows an actual operation sequence diagram of a control module according to the present disclosure. The control module 1 counts a plurality of first specific cycles TC1 (i.e., the complete carrier cycle) and provides a count value CV that increases with time at each first specific cycle TC1. In particular, the first specific cycle TC1 is a signal that triggers the ADC converter ADC1 to convert from conversion to completion in an angle resolution control cycle. When the time reaches first times T1-1 to T1-3 after the trigger point of the first specific cycles TC1 (i.e., the complete carrier cycle, for example, but not limited to 9.765 kHz), the interrupt event is generated to trigger the resolver ISRs R-ISR, and the angle parameters Pt1 to Pt3 of the rotor of the motor 200 are sampled in the resolver ISRs R-ISR. In addition, the control unit 10 also has a plurality of second specific cycles TC2 for self-counting. In particular, the second specific cycle TC2 is a signal that triggers the ADC converter ADC2 to convert from conversion to completion in a PWM control cycle, and the control unit 10 mainly uses the PWM control cycle to periodically adjust the PWM signal PWM. When the time reaches the second times T2-1 to T2-3 after the trigger point of the second specific cycles TC2 (for example, but not limited to 10 kHz), an interrupt event is generated to trigger the current ISRs A-ISR, and the current parameters Ia1 to Ia3, Ib1 to Ib3, and Ic1 to Ic3 provided by the drive circuit 300 to the motor 200 are sampled in the current ISRs A-ISR.

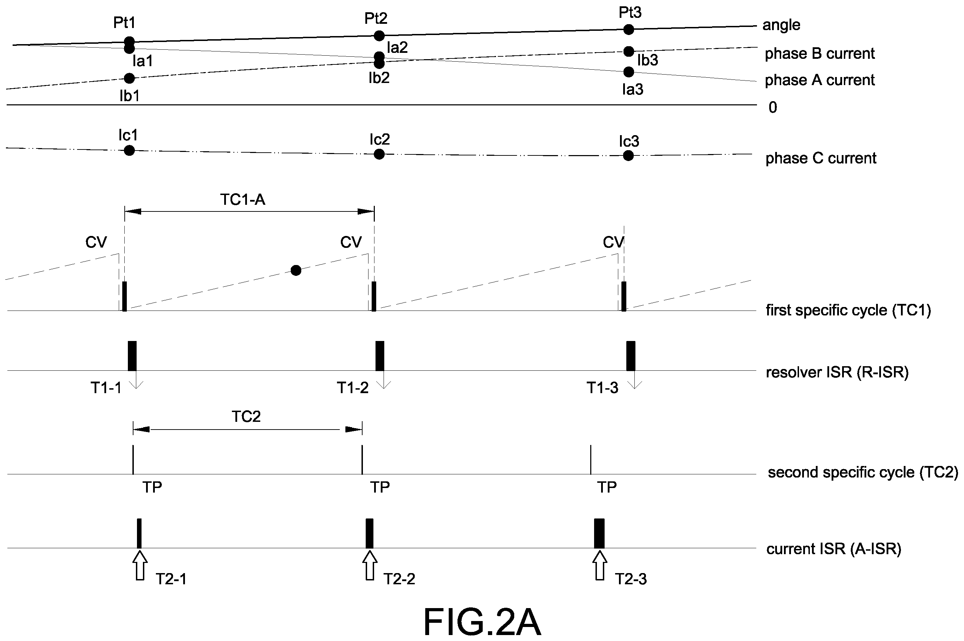

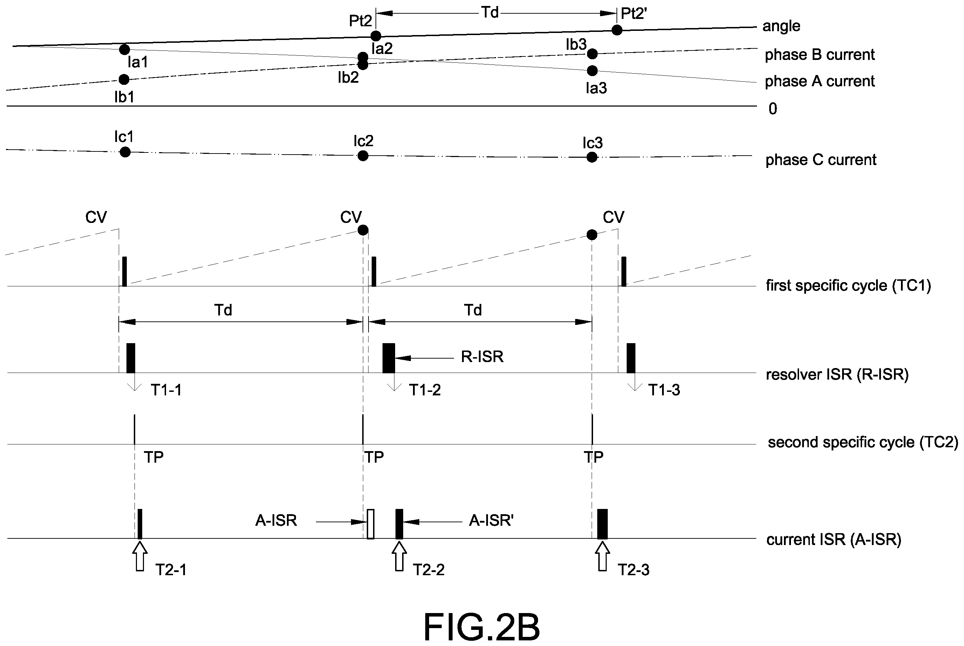

Due to the different sampling frequencies (i.e., 9.765 kHz and 10 kHz) of angle parameters Pt1 to Pt3 and current parameters Ia1 to Ia3, Ib1 to Ib3, and Ic1 to Ic3, they cannot be synchronized. The main reason is that the frequencies of the resolver ISR R-ISR and the current ISR A-ISR are not equal or not multiples of each other, resulting in an unstable time relationship between the two ISRs. Therefore, the angle parameters Pt1-Pt3 obtained at the time of obtaining the current parameters Ia1- Ia3, Ib1-Ib3, and Icl-Ic3 are actually deviated angles, which will cause the current (i.e., current parameters Ia, Ib, and Ic) supplied to motor 200 to be inaccurate or unstable. The following is an illustrative example using FIGs. 2A and 2B. In the specific scenario shown in FIG. 2A, because the frequencies of the resolver ISRs R-ISR and the current ISRs A-ISR are not equal or not multiples of each other, the current ISRs A-ISR is executed twice at a certain first specific cycle TC1_A. This will result in not only the angle lag problem, at the second time T2-2 of the first specific cycle TC1_A, the current angle parameter obtained by the control unit 10 is still the angle parameter Pt1 at the first time T1-1, which means that the angle is not updated. This will cause a situation where the current of motor 200 cannot be accurately controlled or is unstable.

In order to avoid this situation, the present disclosure estimates an angle displacement amount (Δθ=ω*Δt) through the speed of the motor 200 and a time difference between the asynchronous timing, and the time difference is obtained using the timestamp TP (timestamp value). Specifically, refer to FIG. 1C again, the timestamp TP is set at the trigger point of each second specific cycle TC2, and the timestamp TP is saved in a register (not shown) of the control module 1 during each current ISR A-ISR for reading and reference. Therefore, although the first specific cycle TC1 and the second specific cycle TC2 are not quite the same (i.e., 9.765 kHz and 10 kHz) and cannot be synchronized, a current angle parameter Pt1' under the timestamp TP may be estimated by the time difference Td between the angle parameter Pt1 and the timestamp TP. Therefore, the current parameters Ia2, Ib2, and Ic2 at the current time and the current angle parameter Pt1' at the same time may be obtained, and accurate current control may be provided accordingly.

In addition, the present disclosure provides a determination mechanism for identify the electrical angle algorithm corresponding to various scenarios. Specifically, since the control module 1 not only interrupts and samples the angle and current when motor 200 is operating, but also may have other specific ISRs (for example, but not limited to, communicate with external devices, data transmission, etc., which may be preset by control module 1) when the motor 200 is operating. These occasional specific ISRs may happen to be triggered before or after the resolver ISR R-ISR or current ISR A-ISR, causing them to preempt out the resolver ISR R-ISR or current ISR A-ISR that should have been executed.

Specifically, as shown in FIG. 2B, in another specific scenario, when the specific ISR is being processed and preempts out the current ISR A-ISR and resolver ISR R-ISR that should be originally executed, the current ISR A-ISR will be delayed. Therefore, when the specific ISR ends, the original preempted-out current ISR A-ISR should be executed next, but because the resolver ISR R-ISR has also been generated and is waiting for the specific ISR to end.

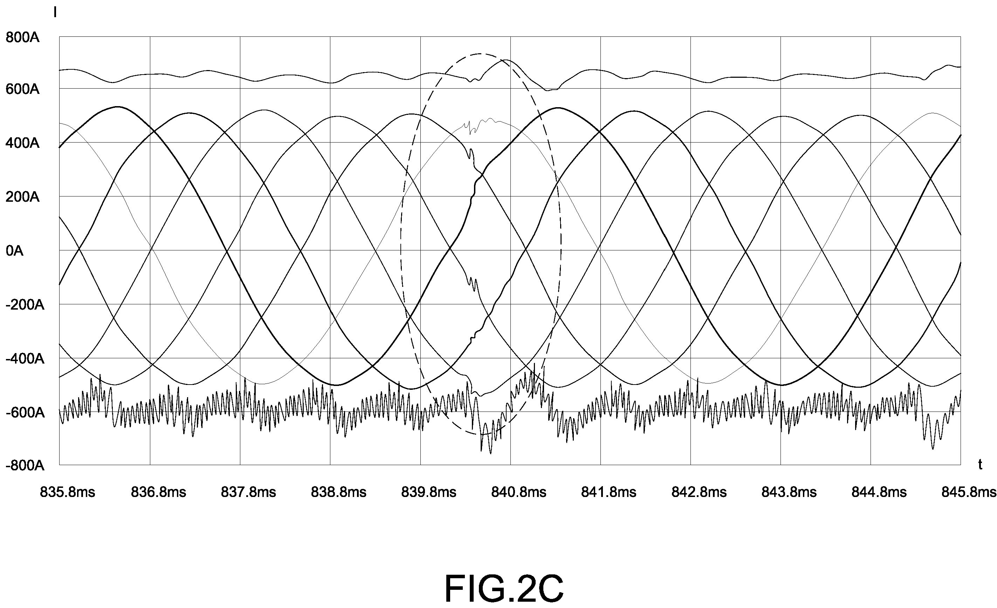

Generally, the resolver ISR R-ISR has higher priority than the current ISR A-ISR, and the current ISR A-ISR has higher priority than other specific ISRs (for example, but not limited to, communicate with external devices, data transmission, etc.). Therefore, when the above ISRs occur simultaneously, the priority order is resolver ISR R-ISR, current ISR A-ISR, and other specific ISRs. Conversely, when the above ISRs do not occur simultaneously, the one that occurs first is executed first. Therefore, when the resolver ISR R-ISR and the current ISR A-ISR occur, the control module 1 first executes the resolver ISR R-ISR, causing the current ISR A-ISR to be delayed until the resolver ISR R-ISR is completed (that is, it is delayed until the position of A-ISR' before being executed). When the current ISR A-ISR' is executed, the current angle parameter Pt2' obtained may be incorrect. In other words, due to the time difference Td between the angle parameter Pt2 and the timestamp TP, the current angle parameter Pt2' under the timestamp TP is incorrectly estimated. Therefore, referring to the current waveform schematic diagram in FIG. 2C, the current angle parameter Pt2' obtained by A-ISR' and the current parameters Ia2, Ib2, and Ic2 will cause the current waveform supplied by the drive circuit 300 to the motor 200 to become distorted as shown in the dotted box, resulting in unstable control.

Therefore, the present disclosure provides a determination mechanism for identify the electrical angle algorithm corresponding to various scenarios, so as to avoid the conditions shown in FIGs. 2A to 2B. The main determination mechanism is that the control module 1 determines whether the count value CV corresponding to the second time T2 is greater than the count value corresponding to the timestamp TP at the trigger point of the previous second specific cycle TC2, and performs the corresponding control accordingly. Furthermore, this determination mechanism mainly summarizes five possible scenarios according to the operation of motor 200 by control module 1, which will be explained one by one below according to these five scenarios.

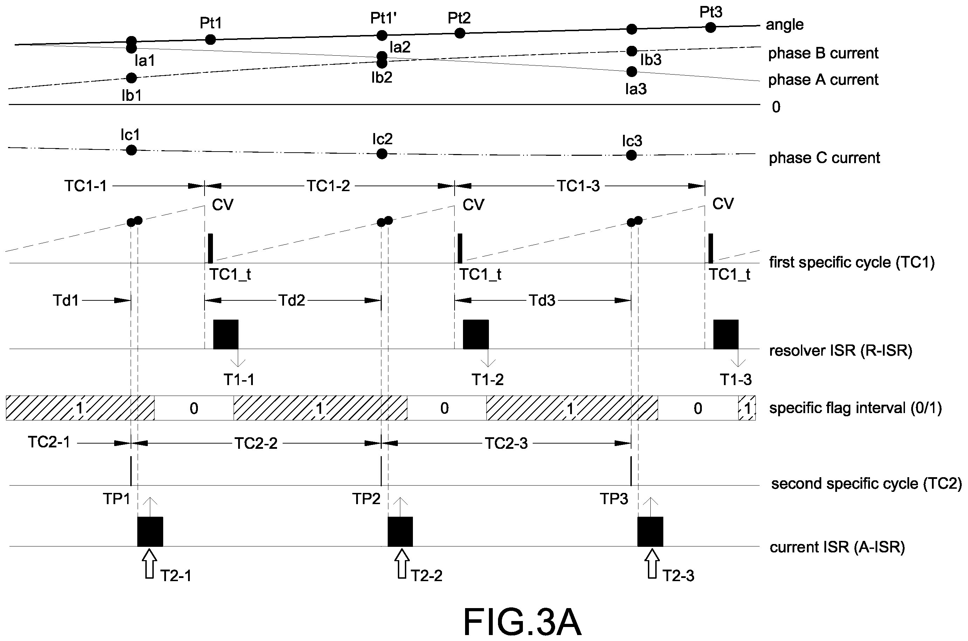

In particular, in FIGs. 3A to 3E, the control module 1 sets a time cycle from an end of the second time T2 to an end of a subsequent first time T1 to a first specific flag interval "0", and sets a time cycle from an end of the first time T1 to an end of a subsequent second time T2 to a second specific flag interval "1". Therefore, the control module 1 not only sets the timestamp TP at the trigger point of each second specific cycle TC2, but also starts the first specific flag interval "0" according to the timestamp TP. Before the control module 1 determines whether the count value CV corresponding to the second time T2 is greater than the count value CV corresponding to a previous timestamp TP, the control module 1 may first determine whether the second time T2 is triggered in the first specific flag interval "0". When the control module 1 determines that the second time T2 is triggered in the first specific flag interval "0", it means that the current ISR A-ISR is executed twice between the two resolver ISRs R-ISR. In other words, the first specific flag interval "0" is from the end of the current ISR A-ISR to the start of the resolver ISR R-ISR, and when the current ISR A-ISR occurs in the first specific flag interval "0", it will not change to the second specific flag interval "1", but will remaining in the first specific flag interval "0". Conversely, the second specific flag interval "1" is from the start of the resolver ISR R-ISR to the end of the current ISR A-ISR, and when the resolver ISR R-ISR occurs in the second specific flag interval "1", it will not change to the first specific flag interval '0', but will remaining in the second specific flag interval "1".

Therefore, by marking specific flag intervals, control module 1 may accurately determine whether the current angle parameters Pt1' and Pt2' under timestamp TP haven't been updated or updated to incorrect positions, and may compensate to the correct position, so as to increase the accuracy of angle estimation accordingly. Furthermore, since the present disclosure uses specific flag intervals, the control module 1 may mainly compensate for the angle parameter Pt according to the specific flag interval ("0" or "1") in which the current ISR A-ISR, the timestamp TP, and the sequence of the resolver ISR, the current ISR A-ISR, and the specific ISR, so as to increase the accuracy of the angle estimation.

Please refer to FIG. 3A, which shows an operation sequence diagram of the motor system under a first scenario according to the present disclosure, and also refer to FIGs. 1A to 2C. FIG. 3A shows the most common scenario of control module 1 during the operation of motor 200. Each first specific cycle TC1 includes the trigger point of the second specific cycle TC2, which is marked with the timestamp TP. When the control module 1 determines that the count value CV corresponding to the second time T2 is greater than the count value corresponding to the timestamp TP at the trigger point of the previous second specific cycle TC2, the control module 1 calculates the current angle parameter as the previous angle parameter Pt of the second time T2 plus an angle displacement parameter. Furthermore, the angle displacement parameter is an angle displacement amount corresponding to the time difference (i.e., second time difference) between the trigger point of the first specific cycle TC1 in which the previous angle parameter Pt is located and the timestamp TP of the same first specific cycle TC1.

Take FIG. 3A as an example, the current angle parameter obtained at the second time T2-2 is the angle parameter Pt1 before the second time T2-2 plus the angle displacement parameter. Furthermore, the two second times T2-1 and T2-2 include a first time T1-1, and the timestamp TP2 is triggered at the second specific flag interval "1", so that the current angle parameter Pt1' should lag behind the angle parameter Pt1. Therefore, the angle displacement parameter is the angle displacement amount corresponding to the time difference Td2 between the trigger point TC1_t of the first specific cycle TC1-2 in which the previous angle parameter Pt1 is located and the timestamp TP2 of the same first specific cycle TC1-2. The angle displacement amount may be obtained by converting the time difference Td2 through Δθ=ω*Δt, and Δt may be obtained by dividing the time difference Td2 with the clock of the control unit 10 itself. Therefore, at the second time T2-2, the current angle parameter Pt1' and the current parameters Ia2, Ib2, and Ic2 may be obtained, and the PWM signal PWM supplied to the drive circuit 300 may be adjusted according to the current angle parameter Pt1' and the current parameters Ia2, Ib2, and Ic2, so as to control the motor 200 through the PWM signal PWM.

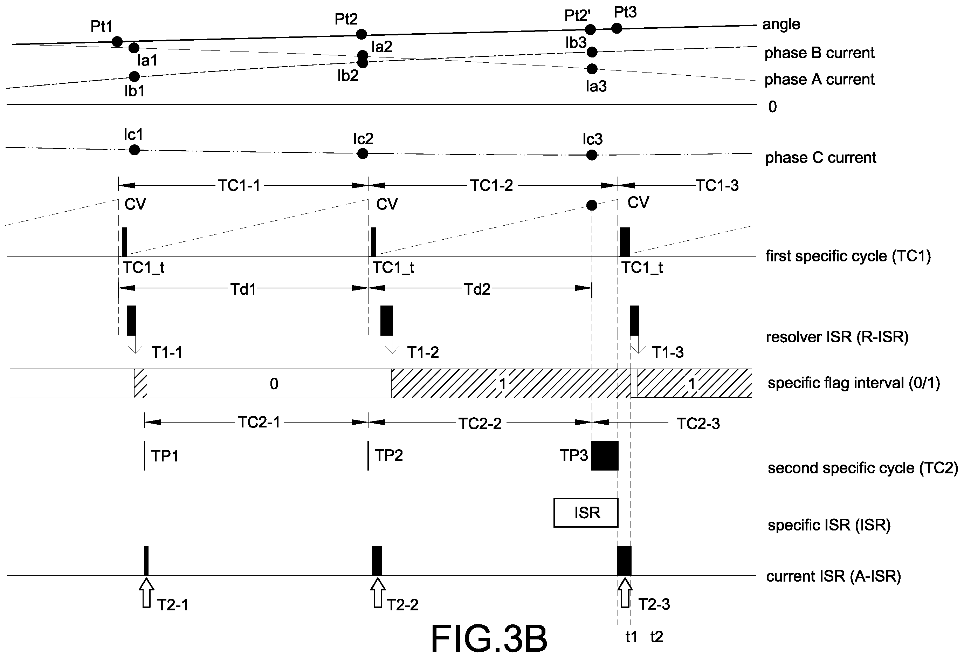

Please refer to FIG. 3B, which shows an operation sequence diagram of the motor system under a second scenario according to the present disclosure, and also refer to FIGs. 1A to 3A. In FIG. 3B, the control module 1 further determines whether the count value CV is reset during an operation cycle t0 to t1 of the second time T2. When the count value CV is reset, the control module 1 calculates the current angle parameter as the angle parameter Pt of the second time T2 plus the angle displacement parameter. Furthermore, the angle displacement parameter is the angle displacement amount corresponding to time difference Td between the trigger point of the first specific cycle TC1 in which the previous angle parameter Pt is located and the timestamp TP of the same first specific cycle TC1.

Take FIG. 3A as an example, when the count value CV is reset, it means that the first specific cycle TC1-2 has ended. This scenario usually occurs when a timestamp TP3 is generated during the execution of a specific ISR (i.e., a time period of the specific ISR), but because the specific ISR has not been completed, the triggering of the second time T2-3 is delayed until the specific ISR is completed. Afterward, when the specific ISR is completed (i.e., time period of the specific ISR has end), it happens to encounter the end of the first specific cycle TC1-2. Therefore, the control module 1 will set the trigger point TC1_t of the first specific cycle TC1-3 in a short time, causing the second time T2-3 to be executed just before the trigger point TC1_t of the first specific cycle TC1-3 is generated. Therefore, as soon as the second time T2-3 enters, the trigger point TC1_t set by the control module 1 may be read immediately (that is, during the operation cycle t0-t1 of the second time T2-3, the count value CV is reset.), and the trigger point TC1_t will not start to be executed for the first time T1-3 until the second time T2-3 ends.

Therefore, the current angle parameter obtained at the second time T2-3 is the angle parameter Pt2 before the second time T2-3 plus the angle displacement parameter. Furthermore, the two second times T2-2 and T2-3 include a first time T1-2, and the timestamp TP3 is triggered at the second specific flag interval "1", so that the current angle parameter Pt2' should lag behind the angle parameter Pt2. Therefore, the angle displacement parameter is the angle displacement amount corresponding to the time difference Td2 between the trigger point TC1_t of a first specific cycle TC1-2 in which the previous angle parameter Pt2 is located and the timestamp TP3 of the same first specific cycle TC1-2. Therefore, at the second time T2-3, the current angle parameter Pt2' and the current parameters Ia3, Ib3, and Ic3 may be obtained, and the PWM signal PWM supplied to the drive circuit 300 may be adjusted according to the current angle parameter Pt2' and the current parameters Ia3, Ib3, and Ic3, so as to control the motor 200 through the PWM signal PWM.

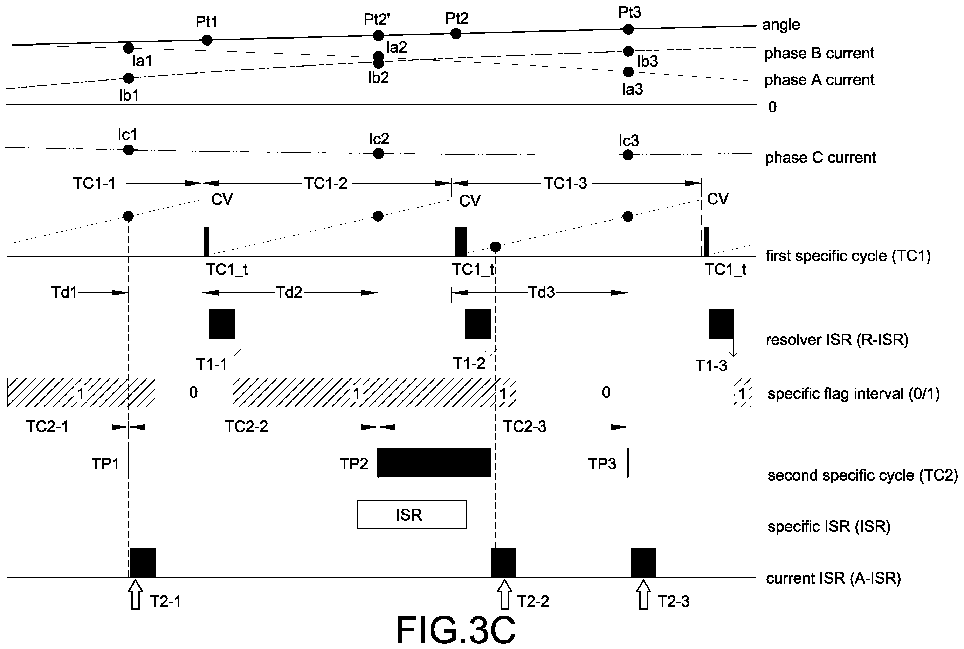

Please refer to FIG. 3C, which shows an operation sequence diagram of the motor system under a third scenario according to the present disclosure, and also refer to FIGs. 1A to 3B. In FIG. 3C, when the control module 1 determines that the count value CV corresponding to the second time T2 is not greater than the count value CV corresponding to the timestamp TP of the trigger point of the previous second specific cycle TC2, the control module 1 calculates the current angle parameter as the previous angle parameter Pt of the second time T2 minus an angle displacement parameter. Furthermore, the angle displacement parameter is an angle displacement amount corresponding to the time difference Td (i.e., first time difference) between the total time of a previous first specific cycle TC1 and a time cycle between the trigger point TC1_t of the previous first specific cycle TC1 and the trigger point (i.e., the timestamp TP) of the previous timestamp TC2. In one embodiment, the difference between the first time difference and the second time difference is that the second time difference is the difference between the trigger point TC1_t of the first specific cycle TC1 and the timestamp TP, while the first time difference is exactly the opposite, so they are divided into "first" and "second" for distinction.

The reason for the scenario shown in FIG. 3C is usually that during the execution of a specific ISR (i.e., a time period of the specific ISR), timestamp TP2 is generated first, and then the trigger point TC1_t is reached. When the specific ISR is completed (i.e., the end of the time period of the specific ISR), the first time T1-2 with high priority starts to execute, causing the second time T2-2 to be continuously delayed until the first time T1-2 is completed before execution starts. Therefore, the count value CV corresponding to the second time T2 is not greater than the count value CV corresponding to the timestamp TP. Therefore, the current angle parameter obtained at the second time T2-2 is the previous angle parameter Pt2 of the second time T2-2 minus the angle displacement parameter. Furthermore, the two second times T2-1 and T2-2 include the two first times T1-1 and T2-2, and the timestamp TP2 is triggered at the second specific flag interval "1", so that its current angle parameter Pt2' should be ahead of the angle parameter Pt2. Therefore, the angle displacement parameter is an angle displacement amount corresponding to the time difference Td2 between the total time of the previous first specific cycle TC1-2 and the time cycle between the trigger point TC1_t of the previous first specific cycle TC1-2 and the previous timestamp TP2. Therefore, at the second time T2-2, the current angle parameter Pt2' and the current parameters Ia2, Ib2, and Ic2 may be obtained, and the PWM signal PWM supplied to the drive circuit 300 may be adjusted according to the current angle parameter Pt2' and the current parameters Ia2, Ib2, and Ic2, so as to control the motor 200 through the PWM signal PWM.

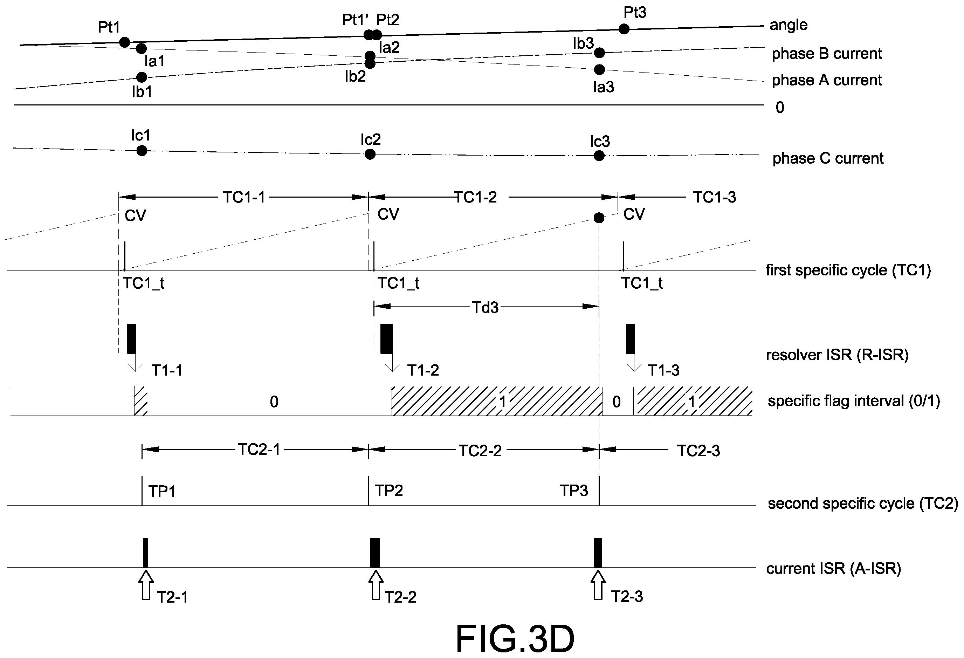

Please refer to FIG. 3D, which shows an operation sequence diagram of the motor system under a fourth scenario according to the present disclosure, and also refer to FIGs. 1A to 3C. The reason for the scenario shown in FIG. 3D is usually that the position of the second time T2-2 is the position where the ADC converter ADC1 has completed conversion, and the current ISR A-ISR has just generated a trigger event at this time. Due to the processing mechanism of the control unit 10, the trigger point TC1_t of the first specific cycle TC1-2 has not yet been generated in a short cycle of time, causing the second time T2-2 with low priority to be inserted and executed first. If the determination mechanism of the present disclosure is not used, since the electrical angle has not been updated, the second time T2-2 at this time may only obtain the old angle parameter Pt1 and the newly reset timestamp TP2 to calculate the incorrect electrical angle. Therefore, the present disclosure may identify various scenarios by introducing the first specific flag interval "0" and the second specific flag interval "1", and adding the resolver ISR R-ISR, the current ISR A-ISR, the count value CV, and the timestamp TP, so as to provide the corresponding electrical angle algorithm according to each scenario to correct the angle parameter Pt. Therefore, the control module 1 may achieve accurate control.

Take FIG. 3D as an example, when control module 1 determines that the second time T2-2 is triggered at the first specific flag interval "0"and the count value CV is reset, it means that the first specific cycle TC1-1 has ended. Therefore, control module 1 calculates the current angle parameter as the previous angle parameter Pt1 of the second time T2-2 plus the angle displacement parameter. Furthermore, the first time is not included in the two second times T2-1 and T2-2, and the timestamp TP2 is triggered at the first specific flag interval "0", so that the current angle parameter Pt1' should lag behind the angle parameter Pt1. Therefore, the angle displacement parameter is the angle displacement amount corresponding to the total time of a previous specific cycle TC1-1. Therefore, at the second time T2-2, the current angle parameter Pt1' and the current parameters Ia2, Ib2, and Ic2 may be obtained, and the PWM signal PWM supplied to the drive circuit 300 may be adjusted according to the current angle parameter Pt1' and the current parameters Ia2, Ib2, and Ic2, so as to control the motor 200 through the PWM signal PWM.

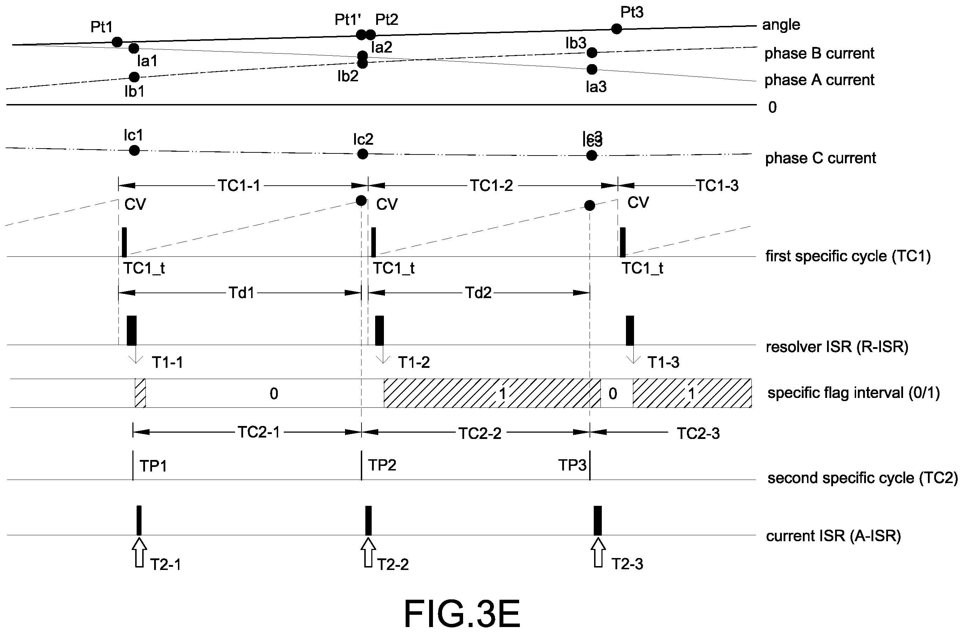

Please refer to FIG. 3E, which shows an operation sequence diagram of the motor system under a fifth scenario according to the present disclosure, and also refer to FIGs. 1A to 3D. In FIG. 3E, the control module 1 also determines that the second time T2 is triggered in the first specific flag interval "0", it also means that the current ISR A-ISR is executed twice between the two resolver ISRs R-ISR. However, the difference between FIG. 3E and FIG. 3D is that when the count value CV in FIG. 3E is not reset, it means that the first specific cycle TC1-1 has not yet ended. Therefore, the control module 1 does not need to apply the total time of the previous specific cycle TC1-1 to calculate the current angle parameter. Therefore, when the control module 1 determines that the second time T2-2 is triggered at the first specific flag interval "0"and the count value CV is not been reset, the control module 1 calculates the current angle parameter as the previous angle parameter Pt1 of the second time T2-2 plus an angle displacement parameter. Furthermore, the first time is not included in the two second times T2-1 and T2-2, and the timestamp TP2 is triggered at the first specific flag interval "0", so that the current angle parameter Pt1" should lag behind the angle parameter Pt1. Therefore, the angle displacement parameter is the angle displacement amount corresponding to the time difference Td1 between the trigger point TC1_t of a first specific cycle TC1-1 in which the previous angle parameter Pt1 is located and the timestamp TP2 of the same first specific cycle TC1-1. Therefore, at the second time T2-2, the current angle parameter Pt1' and the current parameters Ia2, Ib2, and Ic2 may be obtained, and the PWM signal PWM supplied to the drive circuit 300 may be adjusted according to the current angle parameter Pt1' and the current parameters Ia2, Ib2, and Ic2, so as to control the motor 200 through the PWM signal PWM.

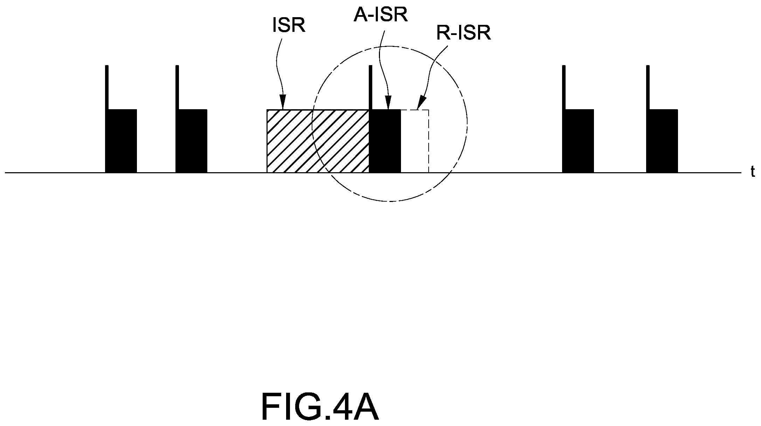

Please refer to FIG. 4A, which shows a schematic diagram of an ISR push situation according to the present disclosure, and also refer to FIGs. 1A to 3E. FIG. 4A mainly shows that the control module 1 inserts a specific ISR to cause the time period of the specific ISR to push the resolver ISR R-ISR and the current ISR A-ISR. Furthermore, the resolver ISR R-ISR or current ISR A-ISR is not triggered until the time period of the specific ISR has ended, resulting in a scenario where the resolver ISR R-ISR and current ISR A-ISR overlap to a large extent. One such scenario is that when the resolver ISR R-ISR and the current ISR A-ISR are nearly overlapping, the control module 1 must wait for the ADC converter ADC1 to convert before it can generate the resolver ISR R-ISR. However, in this scenario, the current ISR A-ISR is triggered slightly earlier than the resolver ISR R-ISR is set to complete, which causes the specific ISR to slightly push the current ISR A-ISR, and the current ISR A-ISR pushes the resolver ISR R-ISR (as shown in the dotted box of FIG. 4A). On the other hand, the scenario in which the resolver ISR R-ISR pushes the current ISR A-ISR is similar to this, and it is not be described here.

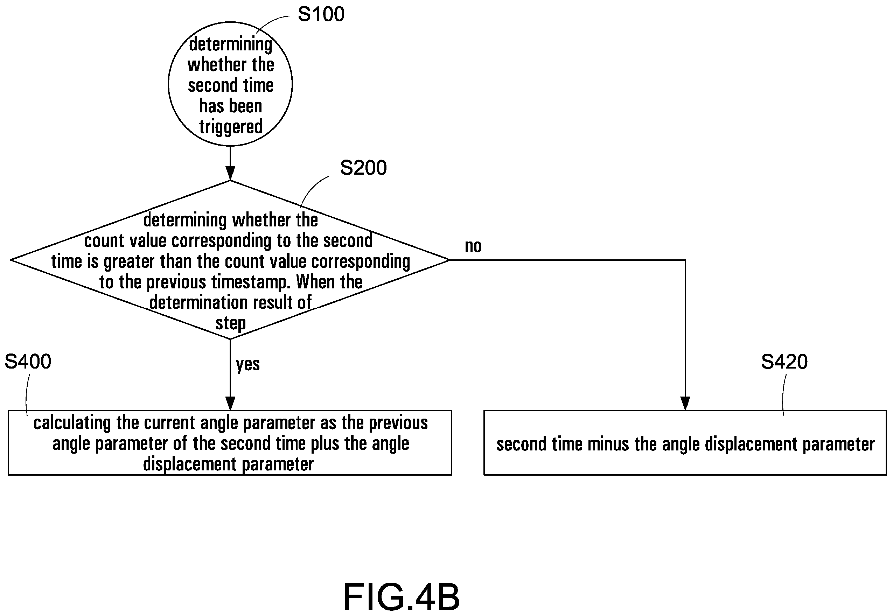

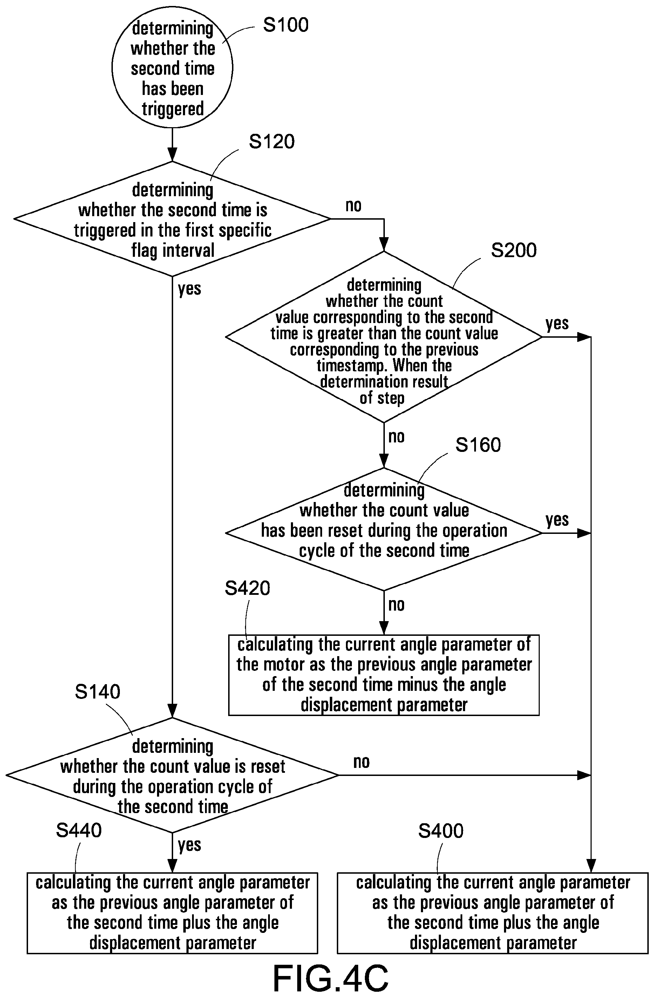

The above-mentioned pushing condition mainly occurs in the second scenario shown in FIG. 3B and the fourth scenario shown in FIG. 3D. The main reason is that the control module 1 inserts a specific ISR, causing the resolver ISR R-ISR and the current ISR A-ISR to overlap to the large extent. However, the control module 1 may prevent the above-mentioned pushing condition from occurring by configuring the specific ISR (i.e., adjusting the trigger position of the specific ISR). Therefore, referring to FIGs. 3A to 3E, the following flowcharts of the timestamp compensation methods of two different motor control devices shown in FIG. 4B and FIG. 4C may be summarized.

Specifically, in FIG. 4B, the control module 1 may prevent the pushing condition shown in FIG. 4A from occurring by configuring the specific ISR, thereby eliminating the scenarios shown in FIGs. 3B and 3D. Therefore, the flow in FIG. 4B includes that: determining whether the second time has been triggered (S 100). When the second time T2 is triggered, it means that the control module 1 wants to obtain the angle parameter Pt and current parameters Ia, Ib, and Ic at the previous timestamp TP. Therefore, the process enters step (S200) that: determining whether the count value corresponding to the second time is greater than the count value corresponding to the previous timestamp. When the result of step (S200) is "yes", the operation method corresponds to FIGs. 3A and 3B. That is, calculating the current angle parameter as the previous angle parameter of the second time plus the angle displacement parameter (S400). Furthermore, the angle displacement parameter is the angle displacement amount corresponding to the time difference Td between the trigger point of a first specific cycle TC1 in which the previous angle parameter Pt is located and the timestamp TP of the same first specific cycle TC1.

Conversely, when the determination result of step (S200) is "no", the operation method corresponds to FIG. 3C. That is, calculating the current angle parameter of the motor as the previous angle parameter of the second time minus the angle displacement parameter (S420). Furthermore, the angle displacement parameter is the angle displacement amount corresponding to the time difference Td between the total time of the previous first specific cycle TC1 and the time cycle between the trigger point TC1_t of the previous first specific cycle TC1 and the timestamp TP of the trigger point of the previous second specific cycle TC2.

On the other hand, in FIG. 4C, the control module 1 has not configured the specific ISR, so the pushing condition shown in FIG. 4A may occur. Therefore, FIG. 4C summarizes the five scenarios shown in FIGs. 3A to 3E, it includes that: triggering the second time (S100). Afterward, determining whether the second time is triggered in the first specific flag interval (S120). When the determination result of step (S120) is "yes", it means that the current ISR A-ISR is executed twice between the two resolver ISRs R-ISR. Therefore, the process proceeds to step (S140) that: determining whether the count value is reset during the operation cycle of the second time. When the determination result is "yes", the operation method corresponds to that shown in FIG. 3D. That is, calculating the current angle parameter as the previous angle parameter of the second time plus the angle displacement parameter (S440). Furthermore, the angle displacement parameter is the angle displacement amount corresponding to the total time of a previous specific cycle TC1-1. Conversely, when the determination result of step (S140) is "no", the operation method corresponds to FIG. 3E. That is, calculating the current angle parameter as the previous angle parameter of the second time plus the angle displacement parameter (S400). The specific details are described in FIG. 4B, and it is not be described here.

On the other hand, when the determination result of step (S120) is "no", it means that the current ISR A-ISR is executed only once between the two resolver ISRs R-ISR. Therefore, the process enters step (S200) that: determining whether the count value corresponding to the second time is greater than the count value corresponding to the previous timestamp. When the determination result of step (S200) is "yes", the process proceeds to step (S400) according to the operation method shown in FIG. 3A. On the other hand, when the determination result of step (S200) is "no", the process proceeds to step (S160) determining whether the count value has been reset during the operation cycle of the second time. When the determination result of step (S160) is "yes", the process proceeds to step (S400) according to the operation method shown in FIG. 3B Conversely, when the. determination result of step (S160) is "no", the process proceeds to step (S420) according to the operation method shown in FIG. 3C. The specific details are described in FIG. 4B, and it is not be described here.

Although the present disclosure has been described with reference to the preferred embodiment thereof, it will be understood that the present disclosure is not limited to the details thereof. Various substitutions and modifications have been suggested in the foregoing description, and others will occur to those of ordinary skill in the art. Therefore, all such substitutions and modifications are intended to be embraced within the scope of the present disclosure as defined in the appended claims.

## Claims

1. A motor control device is configured to control a drive circuit to drive a motor to operate, and the motor control device comprising:
a control module, configured to count a plurality of first specific cycles and a plurality of second specific cycles, and to provide a count value that increases with time during each first specific cycle, wherein the control module is configured to set a specific flag interval,
an angle sensing device configured to sample an angle parameter of the motor at a first time of each first specific cycle according to a resolver ISR (interrupt-service-routine), and
a current sensing device configured to sample a current parameter provided by the drive circuit at a second time of each second specific cycle according to a current ISR, and the control module configured to set a timestamp at a trigger point of each second specific cycle and start the specific flag interval accordingly,
wherein the control module is configured to compensate the angle parameter according to the specific flag interval in which the current ISR is located, the timestamp, and a sequence in which the resolver ISR, the current ISR, and a specific ISR occur.

2. The motor control device as claimed in claim 1, wherein the control module is configured to determine whether the count value corresponding to the second time is greater than the count value corresponding to the timestamp at the trigger point of a previous second specific cycle; when the determination result is "no", the control module is configured to calculate a current angle parameter of the motor as a previous angle parameter of the second time minus an angle displacement parameter, and the angle displacement parameter is an angle displacement amount corresponding to a first time difference between a total time of a previous first specific cycle and a time cycle between the trigger point of the previous first specific cycle and a previous timestamp.

3. The motor control device as claimed in claim 1, wherein when the determination result is "yes", the control module is configured to calculate a current angle parameter as a previous angle parameter of the second time plus an angle displacement parameter, and the angle displacement parameter is an angle displacement amount corresponding to a second time difference between the trigger point of a first specific cycle in which the previous angle parameter is located and the timestamp of the same first specific cycle.

4. The motor control device as claimed in claim 1, wherein when the determination result is "no", the control module is further configured to determine whether the count value is reset during an operation cycle of the second time; when the count value is reset, the control module is configured to calculate a current angle parameter as a previous angle parameter of the second time plus an angle displacement parameter, and the angle displacement parameter is the angle displacement amount corresponding to the second time difference between the trigger point of a first specific cycle in which the previous angle parameter is located and the timestamp of the same first specific cycle.

5. The motor control device as claimed in claim 1, wherein the control module is configured to set a time cycle from an end of the second time to an end of a subsequent first time to the specific flag interval; before the control module determines whether the count value corresponding to the second time is greater than the count value corresponding to a previous timestamp, when the control module determines that the second time is triggered in the specific flag interval and the count value is reset, the control module is configured to calculate a current angle parameter as a previous angle parameter of the second time plus an angle displacement parameter, and the angle displacement parameter is the angle displacement amount corresponding to the total time of a previous specific cycle.

6. The motor control device as claimed in claim 5, wherein when the control module determines that the second time is triggered in the specific flag interval and the count value is not reset, the control module is configured to calculate the current angle parameter as the previous angle parameter of the second time plus an angle displacement parameter, and the angle displacement parameter is the angle displacement amount corresponding to a second time difference between the trigger point of a first specific cycle in which the previous angle parameter is located and the timestamp of the same first specific cycle.

7. The motor control device as claimed in claim 1, wherein at the second time after providing the timestamp, the control module is configured to adjust a PWM (pulse width modulation) signal provided to the drive circuit according to a current angle parameter and the current parameter, so as to control the motor through the PWM signal.

8. The motor control device as claimed in claim 1, wherein when the control module determines that a time point of providing the first time or the second time is in a time period of the specific ISR, the control module is configured to wait until the end of the time period of the specific ISR before providing the first time or the second time.

9. The motor control device as claimed in claim 1, wherein the first specific cycles and the second specific cycles are not identical.

10. The motor control device as claimed in claim 1, wherein the angle sensing device is a resolver, and the resolver is coupled to a rotary shaft of the motor to sample the angle parameter and provide an angle signal.

11. A method for timestamp compensating a motor control device, wherein the motor control device is configured to control a drive circuit to drive a motor to operate, and the motor control device comprising an angle sensing device and a current sensing device, the method comprising steps of:
counting a plurality of first specific cycles and a plurality of second specific cycles, and providing a count value that increases with time during each first specific cycle, and setting a specific flag interval,
controlling the angle sensing device to sample an angle parameter of the motor at a first time of each first specific cycle according to a resolver ISR,
controlling the current sensing device to sample a current parameter provided by the drive circuit at a second time of each second specific cycle according to a current ISR, and setting a timestamp at a trigger point of each second specific cycle, and starting the specific flag interval accordingly, and
compensating the angle parameter according to the specific flag interval in which the current ISR is located, the timestamp, and a sequence in which the resolver ISR, the current ISR, and a specific ISR occur.

12. The method for timestamp compensating a motor control device as claimed in claim 11, further comprising steps of:
(a) determining whether the count value corresponding to the second time is greater than the count value corresponding to the timestamp of the trigger point of a previous second specific cycle,
(b1) determining whether step (a) is "no", and
(c1) calculating a current angle parameter of the motor as a previous angle parameter of the second time minus an angle displacement parameter, and the angle displacement parameter is an angle displacement amount corresponding to a first time difference between a total time of a previous first specific cycle and a time cycle between the trigger point of the previous first specific cycle and a previous timestamp.

13. The method for timestamp compensating a motor control device as claimed in claim 11, further comprising steps of:
(b2) determining that step (a) is "yes", and
(c2) calculating a current angle parameter as a previous angle parameter of the second time plus an angle displacement parameter, and the angle displacement parameter is an angle displacement amount corresponding to a second time difference between the trigger point of a first specific cycle in which the previous angle parameter is located and the timestamp of the same first specific cycle.

14. The method for timestamp compensating a motor control device as claimed in claim 13, further comprising steps after step (b1):
(c3) determining whether the count value is reset during an operation cycle of the second time,
(d1) determining that step (c3) is "yes", and
(e1) executing step (c2).

15. The method for timestamp compensating a motor control device as claimed in claim 14, further comprising steps after step (c3):
(d2) determining that step (c3) is no, and
(e2) executing step (c1).

16. The method for timestamp compensating a motor control device as claimed in claim 13, further comprising steps before step (a):
(a01) setting a time cycle from an end of the second time to an end of a subsequent first time to the specific flag interval,
(a02) determining whether the second time is triggered in the specific flag interval, and
(a03) determining that step (a02) is "yes", and executing step (a).

17. The method for timestamp compensating a motor control device as claimed in claim 13, further comprising steps after step (a02):
(f1) determining whether the count value is reset during an operation cycle of the second time,
(g1) determining whether step (f1) is "yes", and
(h1) calculating a current angle parameter as a previous angle parameter of the second time plus an angle displacement parameter, and the angle displacement parameter is the angle displacement amount corresponding to the total time of a previous specific cycle.

18. The method for timestamp compensating a motor control device as claimed in claim 17, further comprising steps after step (f1):
(g2) determining that step (f1) is "no", and
(h2) executing step (b2).

19. The method for timestamp compensating a motor control device as claimed in claim 11, further comprising steps of:
adjusting a PWM signal provided to the drive circuit according to a current angle parameter and the current parameter at the second time after providing the timestamp, thereby controlling the motor through the PWM signal.

20. The method for timestamp compensating a motor control device as claimed in claim 11, further comprising steps of:
(i1) determining whether a time point of providing the first time or the second time is in a time period of the specific ISR, and
(i2) waiting until the end of the time period of the specific ISR before providing the first time or the second time.
